# EUROPÄISCHE PATENTSCHRIFT

(11) **EP 3 045 083 B1**
(45) Veröffentlichungstag und Bekanntmachung des Hinweises auf die Patenterteilung: **19.04.2017**
(21) Anmeldenummer: 15002738.1
(22) Anmeldetag: 22.09.2015
(51) Int. Cl.: A47C 23/06

(54) **Lattenrost mit einem Rahmen und einer messeinrichtung**
SLATTED FRAME WITH A FRAME AND A MEASURING DEVICE
SOMMIERS À LATTES DOTE D'UN CADRE ET D'UN DISPOSITIF DE MESURE

(30) Priorität: 16.01.2015 DE 102015000278
(43) Veröffentlichungstag der Anmeldung: 20.07.2016
(73) Patentinhaber: Doc AG, 9015 St. Gallen (CH)
(72) Erfinder: Kräutle, Martin, 72379 Hechingen (DE)
(74) Vertreter: Riebling, Peter

(56) Entgegenhaltungen:
- EP-A1- 1 820 423
- EP-A2- 0 141 260
- EP-B1- 2 572 607
- DE-C1- 10 111 585

## Beschreibung

Die Erfindung betrifft ein Lattenrost mit einem Rahmen und einer Messeinrichtung nach dem Oberbegriff des Patentanspruches 1.

Eine solche Anordnung eines Lattenrostes ist beispielsweise mit dem Gegenstand der EP 2 572 607 B1 bekannt geworden.

Die Druckschrift beschreibt bereits schon einen Lattenrost, bei dem zumindest ein Teil der Federleisten mit einem Verformungssensor zusammenarbeitet und die Ausgangssignale der Verformungssensoren einem Rechner zugeführt werden, um in Abhängigkeit vom Gesamtgewicht des Benutzers eine Lastverteilung auf den Federleisten, die Einfederung der Federleisten, die Verkippung der Federleisten um die Rahmenlängsachse und die Verkippung der Federleisten um deren Längsachse sowie den Schwerpunkt des Benutzers und das Vorliegen einer Seitenlage, Rückenlage oder Bauchlage zu ermitteln.

Ferner ist aus dieser Druckschrift bekannt, dass jedes Paar von Federleisten in einem zugeordneten federgelagerten Lagerelement gehalten ist und dass das Lagerelement elektromotorisch heb- und senkbar am Rahmen des Messbettes angeordnet ist.
Jedem Lagerelement, welches entweder ein oder zwei Federleisten aufnimmt, ist demzufolge ein Stellmotor zugeordnet, der über ein Winkelgetriebe einen Hubantrieb antreibt, der geeignet ist, das Lagerelement in vertikaler Richtung heb- und senkbar anzutreiben.

Mit dieser Art des Hubantriebes der Federleisten über Lagerelemente, die von einem Stellmotor heb- und senkbar angetrieben sind, wird eine bestimmte Sollposition der Liegefläche ermittelt. Das bedeutet, dass zur Herstellung einer bestimmten Sollposition der Liegefläche alle Lagerelemente so angesteuert werden, dass z. B. die eine Federleiste geringfügig über der anderen Federleiste liegt, um so ein bestimmtes Liegeprofil auf der Liegefläche zu erstellen.

Man geht zunächst am Anfang der Einrichtung von einer Grundposition aus, die zunächst aus einer vollkommen ebenen Liegefläche besteht, welche alle Federleisten in einer ebenen horizontalen Lage ausrichtet.

Nach der Herstellung dieser Grundposition, im unbelasteten Zustand, liegt eine Versuchsperson auf der Liegefläche und anschließend erfolgt bei annährend jeder Federleiste eine berührungslose Messung der Durchbiegung der Federleisten und des Einfederungsweges im Federköper selbst, um die Einsinktiefe jeder Federleiste bezüglich der Grundposition der Liegefläche zu ermitteln.

Auf diese Weise wird ein Liegeprofil der belasteten Liegefläche erstellt, welches besagt, bei welchem Körpergewicht an welcher Körperstelle sich die jeweilige Federleiste nach unten durchbiegt und absenkt, und diese Distanz wird mit der besagten berührungslosen Messung festgestellt.

Man bestimmt so den Solleinsinkweg der Liegefläche und zwar bezogen auf die Durchbiegung und den Federweg der Federleisten oder der Federleistenpaare indem man diese Werte auf die Lagepunkte der Lagerelemente an den Längsholmen der Liegefläche umrechnet.

Wenn beispielsweise eine Einsinktiefe in der Mitte der Federleiste von z. B. 5 cm gemessen wurde, wird dies mit einem Umrechnungsmaßstab, z. B. 1:10 oder 1:9 auf das längsholmseitige Lagerelement umgerechnet, welchem dann ein Verschiebungsweg von z. B. 1 cm vom Hubantrieb zugeordnet wird.

Wenn beispielsweise eine Längsverschiebung der Federleiste im Mittenbereich der Liegefläche von 50 mm festgestellt wurde, wird dies im Rastermaßstab umgerechnet, z. B. im Rastermaß 1:10, und es wird damit eine entsprechende Hubverstellung an dem längsholmseitigen Lagerelement z. B. um einen Verschiebungsweg von 5 mm durchgeführt.

Somit wird in Abhängigkeit von den ermittelten Messwerten pro Leistepaar der Liegefläche ein bestimmtes Sollprofil durch Antrieb der Hubantriebe hergestellt, indem nun jedes Lagerelement so an der Längsholmseite angehoben oder abgesenkt wird, um zu erreichen, dass schließlich die Wirbelsäule der Versuchsperson auf der Liegefläche gerade ausgerichtet liegt.

Dies bedeutet, die Ausrichtung der Lagerelemente über dort angeordnete Hubantriebe führt zu einer ergonomisch richtigen Ausrichtung der Liegefläche mit dem Ziel, bestimmte Liegezonen zu definieren, um so eine durchgehend gerade Wirbelsäule zu ermöglichen.

Bei den bekannten Hubantrieben, die in gegenseitigem Abstand und parallel zueinander an den Längsholmen des Messbettes angeordnet sind, wird demnach das Liegeprofil in der Art eines Sollprofils stufenlos eingestellt.

Aus Vereinfachungsgründen und für die Verbesserung der späteren Gebrauchstauglichkeit eines daraus abgeleiteten Benutzerbettes ist es vorgesehen, dass aus der stufenlosen Einstellung der Lagerelemente, welche die Federleisten tragen, ein bestimmtes Rastermaß abgeleitet wird, und dieses Rastermaß wird dann später an einem dem Benutzer zugeordneten Lattenrost passgenau eingestellt.

Somit wird bei einer späteren, individuell auf den Benutzer ausgerichteten Liegefläche die vorher über die Messanordnung des Messbettes ermittelte Verschiebungslage der einzelnen Lagerelemente in zugeordnete Rasterabstände von zueinander verschiebbar angeordneten Lagerelementen umgesetzt, um so aus dem stufenlosen Hubantrieb des Messbettes ein bestimmtes Rastermaß einer Hubeinstellung eines auf einen Benutzer individuell angepassten Lattenrostes zu ermöglichen.

Nachdem jeder Hubantrieb für jede Federleiste individuell einstellbar ist, hat man ein individuelles Liegeprofil ermittelt, was Gegenstand der EP 2 572 607 B1 ist.

Nachteil der genannten Druckschrift ist jedoch, dass lediglich ein (vertikaler) Hubantrieb für die individuelle Einstellung der Federleisten gezeigt ist, jedoch keine weiteren Einstellmöglichkeiten.

Der Erfindung liegt deshalb die Aufgabe zugrunde, einen Lattenrost mit einem Rahmen und einer Messeinrichtung nach dem Gegenstand der EP 2 572 607 B1 so weiterzubilden, dass erweiterte Einstell- und Feststellmöglichkeiten gegeben sind.

Zur Lösung der gestellten Aufgabe ist die Erfindung durch die technische Lehre des Anspruches 1 gekennzeichnet.

Merkmal der Erfindung ist nunmehr auch, dass die die Federleisten tragenden Lagerelemente in horizontaler Längsrichtung bezüglich der Längsholme einstellbar und feststellbar ausgebildet sind.

Mit der gegebenen technischen Lehre ergibt sich der Vorteil, dass ein erweiterter Anwendungsbereich gegenüber dem Gegenstand der EP 2 572 607 B1 gegeben ist, denn bei dieser Druckschrift war es nicht möglich, den gegenseitigen Abstand von zueinander benachbarten Federleisten einzustellen. Dies sieht die Erfindung erstmals vor und hat den Vorteil, dass durch die individuelle Einstellung des horizontalen Abstandes der zueinander benachbarten Federleisten nunmehr bestimmte Zonen auf der Liegefläche definiert werden können.

Jede Zone ist durch einen individuellen horizontalen Abstand der jeweils dort angeordneten Federleisten charakterisiert.
Am Beispiel einer Lordosezone kann z. B. angegeben werden, dass in der Lordosezone die Federleisten einen gegenseitigen Abstand von 10 bis 15 mm aufweisen und am Ende der Lordosezone nun ein größerer Abstand zwischen den dort sich anschließenden Federleisten gewählt wird, die dann die sich anschließende Beckenzone definieren.

Beispielsweise kann der Abstand zwischen dem Ende der Lordosezone und dem Beginn der Beckenzone nunmehr auf einen horizontalen Federleistenabstand von 20 mm eingestellt werden, und alle weiteren Federleisten, die der Lordosezone zugeordnet sind, haben dann einen größeren horizontalen Abstand von z. B. 25 mm.

Auf diese Weise können nunmehr individuelle Zonen über die Längsrichtung der Liegefläche verteilt definiert werden, was beim Gegenstand der EP 2 572 607 B1 nicht möglich war.

In einer ersten bevorzugten Ausgestaltung der Erfindung ist es vorgesehen, dass der gegenseitige horizontale Abstand von zueinander benachbarten Federleisten per Hand eingestellt werden kann.

Bei dieser Ausführungsform wird es bevorzugt, wenn die Federleisten in einem Lagerelement aufgenommen werden, welches eine Einschubtasche für das jeweilige Ende der Federleiste aufweist.

Der einfacheren Beschreibung wegen wird in der folgenden Beschreibung davon ausgegangen, dass jeweils die Federleisten paarweise in einem einzigen Lagerelement gehalten werden und jedes Lagerelement eine Einschubtasche aufweist, so dass jeweils paarweise angeordnete Federleisten in einem einzigen Lagerelement gehalten sind und dem Lagerelement eine einzige Hubeinrichtung zugeordnet ist.

Hierauf ist die Erfindung nicht beschränkt, denn es kann in einer anderen Ausgestaltung auch vorgesehen sein, dass mehrere Federleisten, z. B. 3 oder 4 in einem Lagerelement mit jeweiligen Einschubtaschen aufgenommen sind und diesem Lagerelement jeweils ein Hubantrieb zugeordnet ist.

In einer anderen Ausgestaltung kann es auch vorgesehen sein, dass jeweils nur eine einzige Federleiste in der Einschubtasche eines Lagerelementes aufgenommen ist und diesem Lagerelement jeweils ein Hubantrieb zugeordnet ist.

Lediglich der einfacheren Beschreibung wegen wird in der folgenden Beschreibung davon ausgegangen, dass jeweils paarweise angeordnete Federleisten in einem Lagerelement gehalten sind und diesem Lagerelement ein vertikaler Hubantrieb zugeordnet ist. Dies sollte jedoch nicht beschränkend für die vorliegende Erfindung verstanden werden.

In dieser bevorzugten Ausgestaltung wird demnach erfindungsgemäß eine horizontale Verstellung des Lagerelementes im zugeordneten Hubantrieb per Hand vorgeschlagen. Die horizontale Verstellung per Hand erfolgt dadurch, dass am Lagerelement ein in horizontaler Richtung weisender Zapfen vorhanden ist, der in eine zugeordnete horizontal ausgerichtete Längsführung eines Führungsbocks verschiebbar eingreift, wobei der Führungsbock Teil des Hubantriebes ist und aufgrund des Hubantriebes vertikal heb- und senkbar ausgebildet ist.

Die Erfindung beansprucht auch die kinematische Umkehrung dieser Anordnung, bei der die Längsführung im Lagerelement und der Zapfen im oder am Hubantrieb befestigt ist.

In einer anderen Ausgestaltung der Erfindung kann es vorgesehen sein, dass statt der manuellen horizontalen Verschiebung der einzelnen Lagerelemente im zugeordneten Führungsbock des Hubantriebes nunmehr eine elektromechanische oder elektromotorische Verschiebung erfolgt. Hier wird dann z. B. ein Spindelantrieb oder dergleichen verwendet, der im Führungsbock des Hubantriebes angeordnet ist und der das gesamte Lagerelement in horizontaler Richtung in Parallelrichtung zur Längserstreckung des Längsholmes verschiebbar und feststellbar ausbildet.
Zur Einstellung des horizontalen Abstandes zwischen den einzelnen Federleisten wird zunächst eine Null-Position eingestellt, die durch einen rahmenfesten Positionszeiger wiederholbar angezeigt wird.

Die Hubeinstellung am Lagerelement erfolgt dadurch, dass das Lagerelement mit seinem daran ansetzenden Federkörper mit einer Rasterplatte verbunden ist, die höheneinstellbar auf einer gegenüberliegend angeordneten Klipsplatte arretierbar ist. Die Rasterplatte bildet mit einer rahmenseitig befestigbaren Klipsplatte eine vertikale Längsführung, die mit einem Arretierelement in einer bestimmten Höheneinstellung arretierbar ist.

Bei einer auf der Liegefläche liegenden Versuchsperson wird nun der individuelle horizontale Abstand der Federleistenpaare bestimmt, indem man den rahmenseitigen Positionszeiger bezüglich der gegenüberliegenden Skala am horizontal verschiebbaren Montagekörper um z. B. 5 mm verschiebt und die dort ermittelte Zahl abliest.

Danach verlässt die Versuchsperson die Liegefläche, und es wird nun per Hand eine Verschiebung des jeweiligen Montagekörpers in horizontaler Richtung so vorgenommen, bis der vorher über die Positionszeiger ermittelte Skalenwert wieder auf Null gestellt wurde.

Somit wird der jeweilige Montagekörper individuell bei unbelasteter Liegefläche zusammen mit dem gegenüberliegenden in einer Vertikallängsführung zusammen gehaltenen Klipsplatte in horizontaler Richtung verschoben.

Vorteil des Zeigersystems ist, dass man eine wiederholbare Ablesung von Skalenwerten ermöglicht und aufgrund der abgelesenen Skalenwerte dann per Hand oder elektromotorisch eine Verschiebung der einzelnen Montagekörper in horizontaler Ebene durchführt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.
Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: perspektivische Draufsicht auf ein Messbett nach der Erfindung
- Figur 2:: vergrößerter Querschnitt durch die linke Seite des Messbettes nach Figur 1
- Figur 3:: ein Querschnitt durch das Messbett nach Figur 1 über die gesamte Breite
- Figur 4:: eine explosionsartige Darstellung der einzelnen Elemente des Messbettes auf der linken Seite
- Figur 5:: eine gegenüber Figur 4 um einen Winkelgrad gedrehte Darstellung
- Figur 6:: die Draufsicht auf das Messbett mit dem Positionszeigersystem
- Figur 7:: schematische Darstellung des Montagekörpers ohne Anschlag

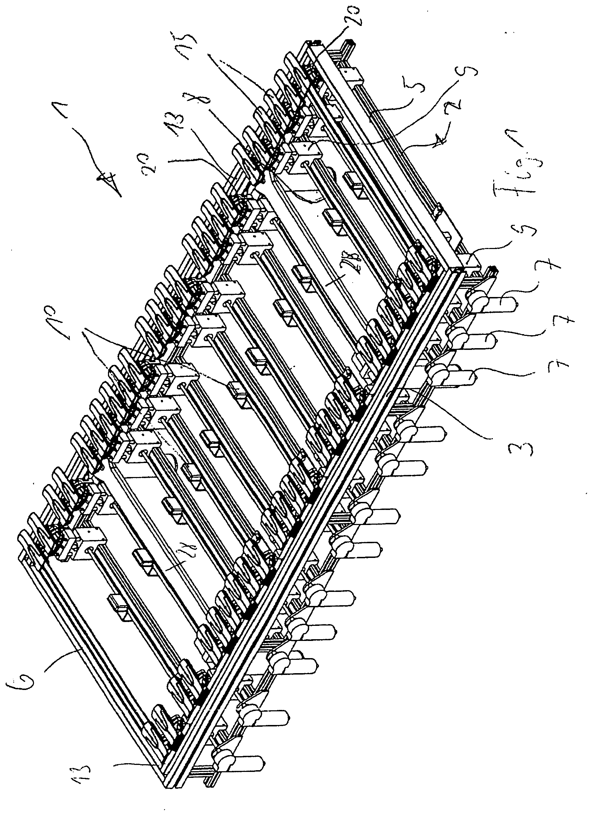

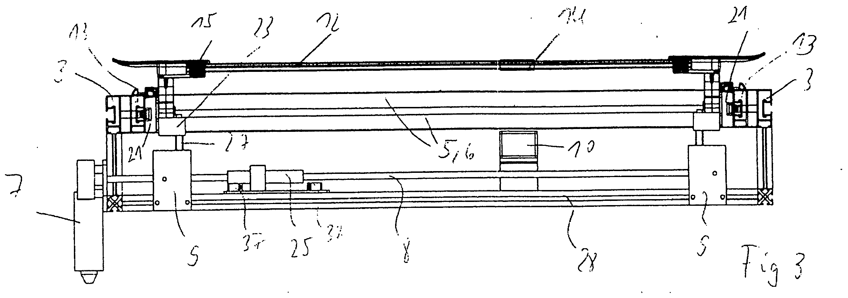

In den Figuren 1 bis 3 ist allgemein ein Messbett 1 dargestellt, welches im Wesentlichen einen bodenseitigen Grundrahmen 2 aufweist, der aus im Abstand parallel zueinander angeordneten Längsholmen 52 besteht, die jeweils in Querrichtung hierzu durch Querverstrebungen 28 verstrebt sind und auf den Längsholmen 52 sind jeweils im gegenseitigen Abstand zueinander und vertikal gerichtete Stützen 53 angeordnet, die insgesamt einen Messrahmen tragen. Der Messrahmen besteht aus äußeren Längsholmen 3, die stirnseitig jeweils durch Querholme 5, 6 abgestützt sind, wobei den äußeren Längsholmen 3 noch innere Längsholme 13 zugeordnet sind.

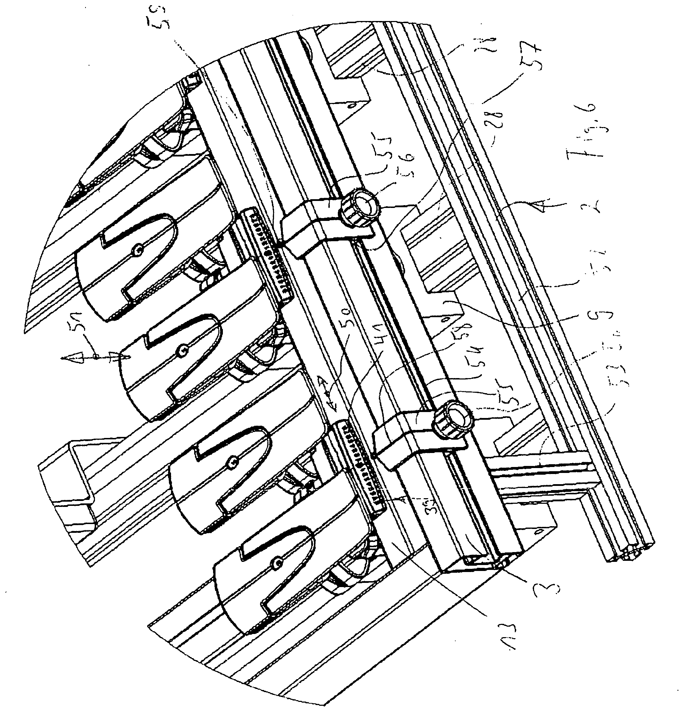

Auf jeweils einer Querverstrebung 28 - siehe Figur 6 - sitzt jeweils ein Stellmotor 7, der jeweils den Hubantrieb der Lagerelemente 15 der Federleisten 12 durchführt.

Es sind somit für jedes Paar von Federleisten 12 ein Stellmotor 7 vorgesehen, der jeweils an der Seite des Längsholmes 52 im Bereich einer Querverstrebung 28 angeordnet ist.

Gemäß Figur 1 bis 3 treibt jeder Stellmotor 7 eine Antriebswelle 8 drehend an, die sich durch ein Winkelgetriebe 9 erstreckt.

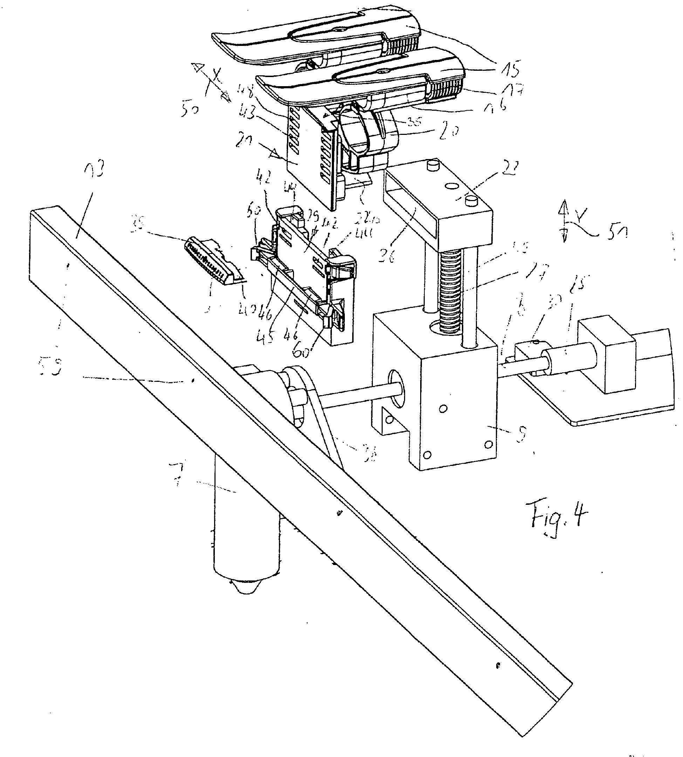

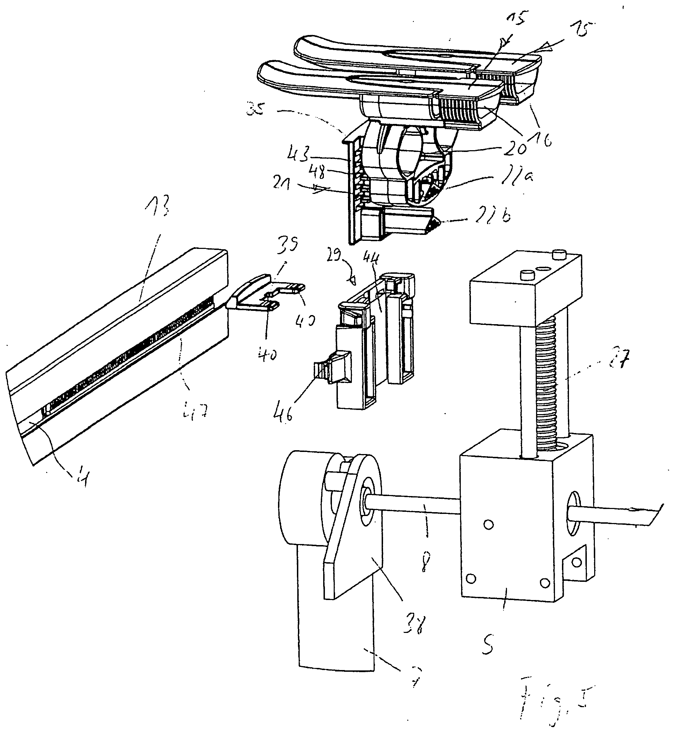

Gemäß Figur 4 und 5 ist der Hubantrieb aus einer Hubspindel 27 gebildet, die parallel durch zwei zueinander längs geführte Hubsäulen 49 geführt ist. Das obere Ende der Hubspindel 27 ist in einem Führungsbock 23 aufgenommen.

Im Mittenbereich der Querverstrebung 28 sind eine Anzahl von hintereinander liegend angeordneten und eine Fluchtlinie bildende Messsensoren 10 angeordnet, die berührungslos die vertikale Durchbiegung und Einfederung der darüber liegenden Federleistenpaare 12 ermitteln.

Jeweils paarweise zusammengefasste Federleisten 12 weisen an der Unterseite eine metallische Messplatte 14 auf, die das Messelement für den darunter liegenden Messsensor 10 bildet.

Die horizontale Längserstreckung der Messplatte 14 ist so groß gewählt, dass jede beliebige Verschiebungslage der jeweiligen Federleiste 12 in der Y-Richtung ein zuverlässiges Signal an dem darunter liegenden Messsensor 10 erzeugt.

Auf diese Weise kann stufenlos die Durchbiegung und Einfederung des jeweiligen Federleistenpaares 12 unabhängig von der Verschiebelage des jeweiligen, die Federleisten 12 aufnehmenden Montagekörpers 21 erfasst werden.

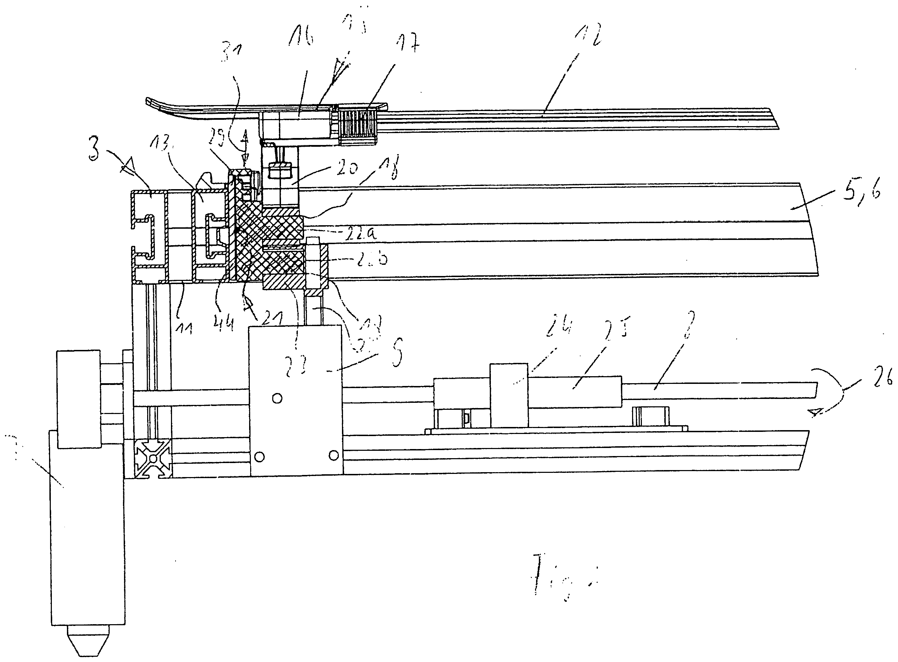

Jedes Ende der Federleiste 12 ist in einer Einschubtasche 16 gemäß Figur 2 aufgenommen, und die Einschubtasche 16 ist Teil des Lagerelementes 15.

Das Lagerelement 15 nimmt somit jeweils das freie Ende der Federleiste 12 auf, und am einwärts gerichteten Ende des Lagerelementes 15 ist ein Härteverstellelement 17 angeordnet, mit dem die Federhärte des darunter liegenden Federkörpers 20 einstellbar ist.

Der Montagekörper 21 ist ein Kunststoffteil, das zwei übereinander liegende Zapfen 22a, 22b aufweist. Der obere Zapfen 22a greift in eine zugeordnete Aufnahmeöffnung 18 des Montagekörpers 21 ein und hält somit den Federkörper 20 fest am Montagekörper 21 befestigt, während der untere Zapfen 22b in eine in horizontaler Richtung und in Längsrichtung des Längsholmes ausgerichtete Längsführung 36 am Führungsbock 23 der Hubeinrichtung horizontal verschiebbar eingreift.

Auf diese Weise ist der gesamte Montagekörper 21 verschiebbar im Führungsbock 23 der Hubeinrichtung gehalten.

Zum Montagekörper 21 gehört noch eine fest mit dieser verbundenen Rasterplatte 43, in der eine Anzahl von zueinander parallelen und einen gegenseitigen Abstand voneinander einnehmenden horizontale Schlitzen 48 vorhanden sind.

Die am Montagekörper 21 angeordnete Rasterplatte 43 greift in der Art einer vertikalen Längsführung 44 in zugeordnete Aufnahmenuten am gegenüberliegenden Teil ein, welches als Klipsplatte 29 bezeichnet ist.

Die Verschiebung des Montagekörpers 21 in der Längsführung 44 der Rasterplatte 43 nach unten, ist durch den Anschlag 35 begrenzt. Der Anschlag 35 ist hierbei bevorzugt an der Rastplatte 43 angeordnet ist.
Die Klipsplatte 29 bildet demnach eine U-förmige, nach hinten zur gegenüberliegenden Rasterplatte 43 geöffnete vertikale Längsführung, wobei die Klipsplatte 29 wiederum eine Anzahl von übereinanderliegenden und einen gegenseitigen Abstand zueinander einnehmenden Schlitzen 42 aufweist.

Die Klipsplatte 29 besteht demnach aus einem in Längsrichtung ausgerichteten Klipselement 40, welches jeweils links und rechts durch Rasthaken 60 begrenzt ist Die Rasthaken 60 sind zunächst außer Eingriff mit den zugeordneten Verzahnungen im Bereich der Rastschiene 47 innerhalb der Führungsnut 4 im Längsholm 13.

Um die Klipsplatte 29 in der Führungsnut 4 zu verschieben, sind zunächst die Schnappverschlüsse 46 mit der Hand zu betätigen, um eine stufenlose Verschiebung zu ermöglichen.

Nach Festlegung der gesuchten Position werden die Schnappverschlüsse 46 entlastet und die Rasthaken 60 schnappen in die zugeordnete festgelegte Position im Bereich der Verzahnung der längsholmseitig angeordneten Rastschiene 47 ein.

Auf diese Weise wird die horizontale Verschiebungslage der Klipsplatte 29 am jeweiligen Längsholm 13 festgelegt.

Somit ist klargestellt, dass durch Eingreifen von Zapfen 22b am Montagekörper 21 eine stufenlose horizontale Verschiebung des gesamten Montagekörpers 21 im Bereich des Führungsbocks 23 der Hubeinrichtung stattfindet.

Gleichzeitig kann mit der Hubeinrichtung der gesamten Montagekörper aufgrund der Längsführung 44 in der Höhe in Bezug zu der holmseitig befestigten Klipsplatte 29 verschoben werden.

Somit ist es erstmals möglich, eine Verschiebung des Montagekörpers 21 sowohl in der X-Richtung (Pfeilrichtung 50) als auch in der Y-Richtung (Pfeilrichtung 51) zu gewährleisten.

Die Antriebswelle 8 wird durch jeweils in Querrichtung verlaufende Führungshülsen 25 drehbar aufgenommen, wobei in diesem Bereich jeweils Endschalter 37 vorhanden sind, um den Hub der Hubspindel 27 zu begrenzen. Damit wird verhindert, dass die Hubspindel 27 aus ihrer Verschiebungsführung in dem Winkelgetriebe 9 heraus fällt.

Die Antriebswelle 8 dreht sich beispielsweise in Pfeilrichtung 26 oder in Gegenrichtung hierzu.

Der jeweilige Stellmotor 7 ist an der Innenseite des Längsholmes 13 an dem Lagerflansch 38 befestigt.

Der Klipsplatte 29 ist ein Kunststoffteil, in dessen zugeordnete Schlitze 42, die vorspringenden Zapfen 40 des Arretierteils 39 lösbar festgelegt sind. Das Arretierteil 39 weist vorderseitig eine Skala 41 auf.

Auf der Längsholmseite sind gemäß Figur 4 eine Anzahl von zueinander parallelen und in gleichmäßigem oder auch ungleichmäßigem Abstand zueinander angeordneten Nullpositionen 59 markiert.

Zur Markierung der Verschiebungslage der einzelnen Montagekörper 21 im Längsholm 13 sind deshalb auf dem äußeren Längsholm 3 eine Anzahl von Positionszeigern 55 verschiebbar angeordnet.

Jeder Positionszeiger weist einen innen liegenden Nutenstein 57 auf, der in eine zugeordnete Längsnut 54 an der Außenseite des äußeren Längsholmes 3 eingreift.

Der Nutenstein 57 kann mit Hilfe einer Rändelschraube 56 in der Längsnut 54 festgestellt werden.

In der Nullpunktlage zeigt der Zeigerstrich 58 auf den Nullpunktwert der Skala 41 am Arretierteil 39.

Somit kann jede beliebige horizontale Verschiebungslage in den Pfeilrichtungen 50 des jeweiligen Montagekörpers 21, der die paarweise angeordneten Federleisten 12 aufnimmt, wiederholbar von der Rahmenseite aus abgelesen werden.

Auf diese Weise werden während des Versuchsaufbaus - siehe die allgemeine Beschreibungseinleitung - die gegenseitigen Abstände der Federleistenpaare individuell in horizontaler Richtung (Pfeilrichtung 50) zueinander eingestellt und der so abgelesene Wert wird dann in Gegenüberstellung des Zeigerstrichs 58 an den zugeordneten Skalenwert der Skala 41 abgelesen.

Nach der Verschiebung des Positionszeigers 55 bei einer von der Versuchsperson belasteten Liegefläche verlässt danach die Versuchsperson die Liegefläche, und nunmehr wird bei entlasteter Liegefläche der Montagekörper 21 durch Eingriff des Zapfens 22b in der Längsführung 36 am Führungsbock 23 in Pfeilrichtung 50 so lange verstellt, bis der Zeigerstrich des Positionszeigers 55 wieder auf die Nullstellung der Skala 41 am Arretierteil 39 zeigt.

Damit ist jede Position des gegenseitigen Abstandes der Federleistenpaare gefunden.

Eine so am Messbett hergestellte individuelle Einstellung der Federleistenpaare in horizontaler Richtung (Pfeilrichtung 50) wird dann auf einen für die Versuchsperson individuell anzupassenden Lattenrost übertragen, wobei die Skalenwerte an der Skala 41 einer der Versuchsperson zugeordneten Liegefläche und einem dazugehörenden Lattenrost übertragen werden.

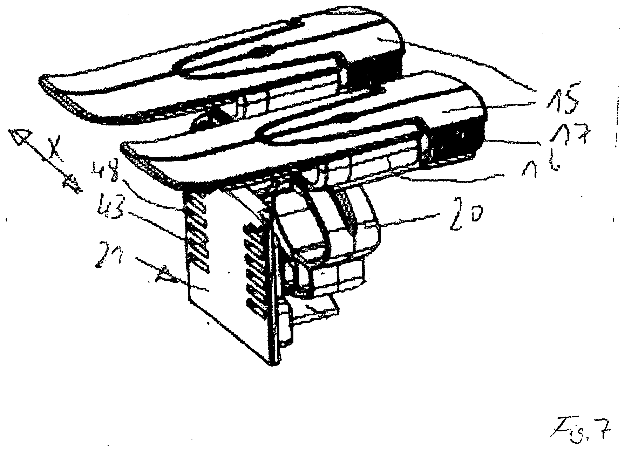

Mit der Figur 7 ist eine weitere bevorzugte Ausführungsform dargestellt, wobei die die Rasterplatte keinen Anschlag 35 aufweist.

Die beiden Zapfen 22a und 22b bilden bei dem Serienrahmen eine Art Übersetzung nach unten. Steckt man das Federelement 15 auf den unteren Bolzen, so erhält man eine tiefere Absenkung des Federleistenpaars, als wenn nur der Zapfen 22a vorhanden wäre. Das Entscheidende ist dabei, dass das Montageteil 21 nicht tiefer als die Unterkante der Clipsplatte 29 abtaucht. Das ist bei einem Serienrahmen eine wichtige Voraussetzung, damit keine Konflikte beim Einlegen der Rahmen in unterschiedlichste Bettgestelle entstehen können.

Dieser Effekt kann bei der erfindungsgemäßen Ausführungsform ohne ein Umstecken des Federelements 21 erreicht werden, indem es möglich ist die Montageplatte 21 tiefer abzusenken. Hierbei steckt das Federelement 15 auf Position 22a.

Anstelle der zulässigen fünf Raster, welche durch die Schlitze 48 gebildet sind, fährt das Messbett bei einer Absenkung nach unten kontinuierlich alle Positionen an, welche sich aus der manuellen Übersetzung mittels Zapfen 22a und 22b ergeben.

### Zeichnungslegende

- 1: Messbett
- 2: Grundrahmen
- 3: Längsholm außen
- 4: Führungsnut
- 5: Querholm
- 6: Querholm
- 7: Stellmotor
- 8: Antriebswelle
- 9: Winkelgetriebe
- 10: Messsensor
- 11: Verbindungsplatte
- 12: Federleiste
- 13: Längsholm innen
- 14: Messplatte
- 15: Lagerelement
- 16: Einschubtasche
- 17: Härteverstellelement
- 18: Aufnahmeöffnung
- 19:
- 20: Federkörper
- 21: Montagekörper
- 22: Zapfen (von 21) a oben, b unten
- 23: Führungsbock
- 24:
- 25: Führungshülse
- 26: Pfeilrichtung
- 27: Hubspindel
- 28: Querverstrebung
- 29: Klipsplatte
- 30:
- 31:
- 32:
- 33:
- 34:
- 35: Anschlag
- 36: Längsführung (in 23)
- 37: Endschalter
- 38: Lagerflansch
- 39: Arretierteil
- 40: Zapfen
- 41: Skala
- 42: Schlitz
- 43: Rasterplatte
- 44: Längsführung
- 45: Klipselement
- 46: Schnappverschluss
- 47: Rastschiene
- 48: Schlitze (von 43)
- 49: Hubsäule
- 50: Pfeilrichtung
- 51: Pfeilrichtung
- 52: Längsholm
- 53: Stütze
- 54: Längsnut
- 55: Positionszeiger
- 56: Rändelschraube
- 57: Nutenstein
- 58: Zeigerstrich
- 59: Nullposition
- 60: Rasthaken

## Patentansprüche

1. Lattenrost mit einem Rahmen und einer Messeinrichtung zur Erfassung der Verformung einer Liegefläche unter der Last einer darauf liegenden Person, wobei die Erfassung der Verformung durch Erfassung der vertikalen Durchbiegung von Federleisten (12) erfolgt, die im Lattenrost (3, 5, 6, 13) beidseitig mit ihren freien Enden in jeweils einem Montagekörper (21) gehalten sind, an dem das verschiebbare Ende eines vertikal gerichteten Hubantriebs (7, 8, 27) angreift, der gegenüber einem bodenseitigen Grundrahmen (2) abgestützt ist, **dadurch gekennzeichnet, dass** der gegenseitige horizontale Abstand zwischen den Federleisten (13) einstellbar und feststellbar ist.

2. Lattenrost nach Anspruch 1, **dadurch gekennzeichnet, dass** jeweils die freien Enden von paarweise vorhandenen Federleisten (13) in jeweils einer Einschubtasche (16) eines Lagerelements (15) aufgenommen sind, und das Lagerelement (15) unter Zwischenschaltung eines Federkörpers (20) mit dem Montagekörper (21) verbunden ist.

3. Lattenrost nach Anspruch 1 oder 2, **dadurch gekennzeichnet, dass** am Montagekörper (21) mindestens ein in horizontaler Richtung gerichteter Zapfen (22b) angeordnet ist, der in horizontaler Richtung verschiebbar in eine Längsführung (36) eines Führungsbocks (23) eingreift, der mit dem freien, vertikal verschiebbaren Ende einer Hubspindel (27) des Hubantriebs verbunden ist.

4. Lattenrost nach einem der Ansprüche 1 bis 2, **dadurch gekennzeichnet, dass** am Montagekörper (21) eine in horizontaler Richtung ausgerichtete Längsführung angeordnet ist, in welche ein Führungszapfen eingereift, der mit dem freien, vertikal verschiebbaren Ende einer Hubspindel (27) des Hubantriebs verbunden ist.

5. Lattenrost nach einem der Ansprüche 1 bis 4, **dadurch gekennzeichnet, dass** die vertikal verschiebbare Führung zwischen dem hubeinstellbaren Montagekörper (21) und dem Rahmen durch eine am Montagekörper (21) befestigte Rasterplatte (43) gebildet ist, die mit einer rahmenseitig befestigbaren Klipsplatte (29) eine höheneinstellbare Längsführung (36) bildet.

6. Lattenrost nach Anspruch 5, **dadurch gekennzeichnet, dass** die rahmenseitige Klipsplatte (29) verschiebbar und feststellbar in einer Führungsnut (4) am inneren Längsholm (13) des Rahmens gehalten ist.

7. Lattenrost nach Anspruch 6, **dadurch gekennzeichnet, dass** die Klipsplatte (29) mit einem in die Führungsnut (4) eingreifenden Klipselement (45) verbunden ist, an dem handbetätigbare Rasthaken (60) angeordnet sind, die in der arretierten Position formschlüssig in eine Verzahnung einer in der Führungsnut (4) angeordneten Rastschiene (47) eingreifen.

8. Lattenrost nach mindestens einem der Ansprüche 1 bis 7, **dadurch gekennzeichnet, dass** an der Klipsplatte (29) ein Arretierteil (39) befestigt ist, das an seiner Vorderseite eine Skala (41) trägt, die einem rahmenseitig verschiebbaren Positionszeiger (55) zugeordnet ist.

9. Lattenrost nach Anspruch 8, **dadurch gekennzeichnet, dass** der Positionszeiger (55) einen gegen die Skala (41) gerichteten Zeigerstrich (58) aufweist und mit einem Nutenstein (57) und einer damit zusammen wirkenden Rändelschraube (56) verschiebbar und feststellbar in einer Längsnut (54) am äußeren Längsholm (3) aufgenommen ist.

## Claims

1. Slatted base having a frame and a measuring device for detecting the deformation of a lying surface under the load of a person lying on top, wherein the detection of the deformation is effected by detecting the vertical sag of spring strips (12) which are held in the slatted bed base (3, 5, 6, 13) on both sides by their free ends each in a mounting body (21) which is engaged by the slidable end of a vertically directed lift drive (7, 8, 27) which is supported relative to a base frame (2) on the bottom side, **characterised in that** the mutual horizontal distance between the spring strips (13) is adjustable and lockable.

2. Slatted base according to claim 1, **characterised in that** the free ends of spring strips (13) which in pairs are held in each case in an insertion pocket (16) of a bearing element (15), and the bearing element (15) is connected to the mounting body (21) with the interposition of a spring body (20).

3. Slatted base according to claim 1 or 2, **characterised in that** on the mounting body (21) is arranged at least one pin (22b) pointing in a horizontal direction, which engages so as to be slidable in the horizontal direction in a longitudinal guide (36) of a guide block (23) which is connected to the free, vertically slidable end of a lifting spindle (27) of the lift drive.

4. Slatted base according to one of claims 1 to 2, **characterised in that** on the mounting body (21) is arranged a longitudinal guide which is oriented in the horizontal direction and in which engages a guide pin which is connected to the free, vertically slidable end of a lifting spindle (27) of the lift drive.

5. Slatted base according to one of claims 1 to 4, **characterised in that** the vertically slidable guide between the mounting body (21) of adjustable stroke and the frame is formed by a grid plate (43) which is attached to the mounting body (21) and which, with a clip plate (29) which can be attached on the frame side, forms a longitudinal guide (36) of adjustable height.

6. Slatted base according to claim 5, **characterised in that** the clip plate (29) on the frame side is held slidably and lockably in a guide groove (4) in the inner longitudinal strut (13) of the frame.

7. Slatted base according to claim 6, **characterised in that** the clip plate (29) is connected to a clip element (45) which engages in the guide groove (4) and on which are arranged manually operated latch hooks (60) which, in the locked position, engage in form-locking relationship in a tooth system of a latch rail (47) arranged in the guide groove (4).

8. Slatted base according to one or more of claims 1 to 7, **characterised in that** attached to the clip plate (29) is a locking portion (39) which on its front side has a scale (41) which is associated with a position indicator (55) which is slidable on the frame side.

9. Slatted base according to claim 8, **characterised in that** the position indicator (55) has an indicator line (58) directed towards the scale (41) and, with a sliding block (57) and a knurled-head screw (56) cooperating therewith, is held slidably and lockably in a longitudinal groove (54) in the outer longitudinal strut (3).

## Revendications

1. Sommier à lattes avec un cadre et un dispositif de mesure pour détecter la déformation d'une surface de couchage sous la charge d'une personne allongée dessus, la détection de la déformation se faisant grâce à la détection du fléchissement vertical de lattes à ressort (12) qui sont fixées dans le sommier à lattes (3, 5, 6, 13), des deux côtés, avec leurs extrémités libres dans des corps de montage respectifs (21) au niveau desquels agit l'extrémité mobile d'une commande de levage (7, 8, 27) dirigée verticalement et en appui par rapport à un cadre de base (2) situé côté sol,
**caractérisé en ce que** l'écartement horizontal mutuel entre les lattes à ressort (13) est apte à être réglé et fixé.

2. Sommier à lattes selon la revendication 1, **caractérisé en ce que** les extrémités libres de lattes à ressort (13), prévues par paires, sont logées chacune dans un fourreau d'introduction (16) d'un élément de support (15), et l'élément de support (15) est relié au corps de montage (21), avec un corps à ressort (20) entre les deux.

3. Sommier à lattes selon la revendication 1 ou 2, **caractérisé en ce qu'**il est prévu sur le corps de montage (21) au moins un axe (22b) qui est dirigé dans le sens horizontal et qui, mobile dans le sens horizontal, pénètre dans un guidage longitudinal (36) d'un support de guidage (23) qui est relié à l'extrémité libre, mobile verticalement, d'une broche de levage (27) de la commande de levage.

4. Sommier à lattes selon l'une des revendications 1 à 2, **caractérisé en ce qu'**il est prévu sur le corps de montage (21) un guidage longitudinal, dirigé dans le sens horizontal, dans lequel pénètre un axe de guidage relié à l'extrémité libre, mobile verticalement, d'une broche de levage (27) de la commande de levage.

5. Sommier à lattes selon l'une des revendications 1 à 4, **caractérisé en ce que** le guidage mobile verticalement entre le corps de montage (21) à levage réglable et le cadre est formé par une plaque à crans (43) qui est fixée au corps de montage (21) et qui forme avec une plaque de clipsage (29) apte à être fixée côté cadre un guidage longitudinal (36) réglable en hauteur.

6. Sommier à lattes selon la revendication 5, **caractérisé en ce que** la plaque de clipsage (29) prévue côté cadre est fixée, mobile et apte à être bloquée, dans une rainure de guidage (4) prévue sur le longeron intérieur (13) du cadre.

7. Sommier à lattes selon la revendication 6, **caractérisé en ce que** la plaque de clipsage (29) est reliée à un élément de clipsage (45) qui pénètre dans la rainure de guidage (4) et sur lequel sont disposés des crochets de verrouillage à commande manuelle (60) qui, dans la position arrêtée, pénètrent par complémentarité de forme dans une denture d'un rail de verrouillage (47) disposé dans la rainure de guidage (4).

8. Sommier à lattes selon l'une des revendications 1 à 7, **caractérisé en ce qu'**il est prévu, fixée à la plaque de clipsage (29), une pièce d'arrêt (39) qui porte sur son côté avant une échelle graduée (41) associée à un indicateur (55) mobile côté cadre.

9. Sommier à lattes selon la revendication 1, **caractérisé en ce que** l'indicateur de position (55) présente un trait (58) dirigé vers l'échelle graduée, et, avec un coulisseau (57) et une vis moletée (56) qui coopère avec celui-ci, est logé, mobile et apte à être bloqué, dans une rainure longitudinale (54) prévue sur le longeron extérieur (3).
